# EUROPÄISCHE PATENTSCHRIFT

(11) **EP 3 505 414 B1**
(45) Veröffentlichungstag und Bekanntmachung des Hinweises auf die Patenterteilung: **24.02.2021**
(21) Anmeldenummer: 19152145.9
(22) Anmeldetag: 26.04.2017
(51) Int. Cl.: B60W 30/14, B62D 15/02, B60W 30/18, B60W 30/16, B60W 30/10, B60K 31/00, G05D 1/02, G01S 13/93, B60W 50/00

(54) **KRAFTFAHRZEUG-STEUERVORRICHTUNG UND VERFAHREN ZUM BETREIBEN DER STEUERVORRICHTUNG ZUM AUTONOMEN FÜHREN EINES KRAFTFAHRZEUGS**
MOTOR VEHICLE CONTROL DEVICE AND METHOD FOR OPERATING THE CONTROL DEVICE FOR AUTONOMOUS DRIVING OF A MOTOR VEHICLE
DISPOSITIF DE COMMANDE DE VÉHICULE AUTOMOBILE ET PROCÉDÉ DE FONCTIONNEMENT DU DISPOSITIF DE COMMANDE DESTINÉ AU GUIDAGE AUTONOME D'UN VÉHICULE AUTOMOBILE

(30) Priorität: 10.05.2016 DE 102016208000
(43) Veröffentlichungstag der Anmeldung: 03.07.2019
(62) Teilanmeldung aus: 17168242.0
(73) Patentinhaber: VOLKSWAGEN AKTIENGESELLSCHAFT, 38440 Wolfsburg (DE)
(72) Erfinder: Ulbrich, Simon, 85049 Ingolstadt (DE); Grossjohann, Simon, 38442 Wolfsburg (DE); Appelt, Christian, 38518 Gifhorn (DE); Homeier, Kai, 30453 Hannover (DE)

(56) Entgegenhaltungen:
- DE-A1- 10 012 737
- DE-A1-102004 029 369
- DE-A1-102005 050 662
- JP-A- 2009 248 892
- KAWABE T ET AL: "An optimal path generator using a receding horizon control scheme for intelligent automobiles", CONTROL APPLICATIONS, 2004. PROCEEDINGS OF THE 2004 IEEE INTERNATIONAL CONFERENCE ON TAIPEI, TAIWAN SEPT. 2-4, 2004, PISCATAWAY, NJ, USA,IEEE, Bd. 2, 2. September 2004 (2004-09-02), Seiten 1597-1602, XP010764105, DOI: 10.1109/CCA.2004.1387604 ISBN: 978-0-7803-8633-4

## Beschreibung

Die Erfindung betrifft ein Verfahren zum Betreiben einer Steuervorrichtung, welche zum autonomen Fahren oder Führen eines Kraftfahrzeugs ausgelegt ist. Mit anderen Worten können durch die Steuervorrichtung eine Längsführung und eine Querführung des Kraftfahrzeugs ohne Zutun eines Fahrers durchgeführt werden. Zu der Erfindung gehören auch die Steuervorrichtung, welche gemäß dem Verfahren betreibbar ist, sowie ein Kraftfahrzeug mit der Steuervorrichtung.

Bei der Entwicklung von automatisierten Fahrzeugen für den Straßenverkehr kommt es häufig zu Situationen, in denen ein automatisiert oder autonom fahrendes Fahrzeug auf einer mehrstreifigen Straße fährt. Hierbei kann es vorkommen, dass ein vorausfahrendes Fremdfahrzeug oder Vorderfahrzeug nur marginal langsamer fährt als eine der Steuervorrichtung für die Längsführung vorgegebene Zielgeschwindigkeit oder Sollgeschwindigkeit. Ein Geschwindigkeitsnachteil von 1 bis 2 Kilometer pro Stunde ist bei heutigen Steuervorrichtungen nicht groß genug, um einen Fahrstreifenwechsel zum Überholen des langsameren Vorderfahrzeugs zu bewirken. Hiergegen sprechen zum Beispiel Komfortaspekte, da ein Beschleunigungsvorgang für das Überholen mit Lenkmanövern und Beschleunigungskräften und Motorgeräuschen verbunden ist. Allerdings würde nach mehreren Minuten ein menschlicher Fahrer oder auch ein Passagier sich wünschen, dass das automatisierte Fahrzeug dennoch überholt. Während also in der momentanen Situation der Geschwindigkeitsnachteil marginal erscheint, wirkt er sich auf längere Dauer doch signifikant aus.

Ein technisch ähnliches Problem stellt das Überholen eines langsam vorausfahrenden Fahrzeugs auf einer Landstraße dar. Hier muss zum Überholen die Fahrspur für den Gegenverkehr genutzt werden. Dies kann dennoch sinnvoll sein, wenn die Fahrgeschwindigkeit des vorausfahrenden Fremdfahrzeugs deutlich unter der Sollgeschwindigkeit liegt oder auch nur marginal unter der Sollgeschwindigkeit, dafür aber abzusehen ist, dass das Fremdfahrzeug für einen längeren Zeitraum vorausfahren wird.

Aus der EP 1 777 143 B1 und der EP 0 443 185 A2 ist bekannt, dass in einem Kraftfahrzeug eine Erkennungseinrichtung bereitgestellt sein kann, die in einer Umgebung des Kraftfahrzeugs befindliche Objekte, beispielsweise Fremdfahrzeuge, erkennen und auch eine Relativgeschwindigkeit der Objekte bezüglich des Kraftfahrzeugs ermitteln kann. Durch eine Steuervorrichtung, welche die Erkennungseinrichtung zum Erkennen von Fremdfahrzeugen nutzt, kann in Abhängigkeit von der Lage und den Geschwindigkeitswerten der Fremdfahrzeuge eine Überholempfehlung oder eine Spurwechselempfehlung erzeugen.

Aus einer wissenschaftlichen Veröffentlichung von Kawabe et al. (T. Kawabe, H. Nishira, T. Ohtsuka, "An Optimal Path Generator Using a Receding Horizon Control Scheme for Intelligent Automobiles", Proceedings of the 2004 IEEE International Conference on Control Applications, Taipei, Taiwan, 2004) ist ein Modell bekannt, um die Geduld eines Fahrers zu simulieren, während sein Fahrzeug hinter einem Fremdfahrzeug fährt, das langsamer ist als eine vom Fahrer vorgebebene Sollgeschwindigkeit.

Die JP 2009 248892 A offenbart ein Fahrsteuerungssystem. Das Fahrsteuerungssystem ist dazu eingerichtet, eine Angemessenheit eines Überholens eines voranfahrenden Fahrzeugs zu bewerten.

Die DE 100 12 737 A1 offenbart eine Vorrichtung zur Durchführung eines Fahrspurwechsels durch ein Kraftfahrzeug. Die Vorrichtung weist eine Überwachungseinrichtung auf, die dazu eingerichtet ist, ein in einer Momentanspur vorausfahrendes Fahrzeug und dessen Geschwindigkeit zu erfassen. Eine Entscheidereinheit entscheidet auf Grundlage von Verkehrsinformationen, ob ein Spurwechsel vorgenommen werden kann.

Die DE 10 2004 029 369 A1 beschreibt einen Spurwechselassistenten für Kraftfahrzeuge, aufweisend eine Umfeldsensorik zur Erfassung eines Verkehrsumfelds. Die Umfeldsensorik ist dazu eingerichtet, einen Verkehr auf einer Nebenspur zu erfassen. Eine Entscheidungseinrichtung des Spurwechselassistenten ist dazu eingerichtet, einen Spurwechselwunsch zu bestimmen.

Der Erfindung liegt die Aufgabe zugrunde, mittels einer Steuervorrichtung für einen autonomen Fahrbetrieb eine Überholsituation, bei welcher ein vorausfahrendes Fremdfahrzeug nur geringfügiger langsamer als eine vorgegebene Sollgeschwindigkeit fährt, einzuschätzen.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie Figuren offenbart.

Durch die Erfindung ist ein Verfahren zum Betreiben einer Steuervorrichtung zum autonomen Führen eines Kraftfahrzeugs bereitgestellt. Das autonome Führen umfasst insbesondere das Regeln oder Einstellen einer Fahrgeschwindigkeit, also die Längsführung. Zusätzlich kann das autonome Führen auch eine Querführung, also das Lenken des Kraftfahrzeugs, umfassen.

Durch die Steuervorrichtung soll also zumindest die Fahrgeschwindigkeit des Kraftfahrzeugs eingestellt werden. Hierzu wird eine einzustellende Fahrgeschwindigkeit des Kraftfahrzeugs als Sollgeschwindigkeit vorgegeben. Das Verfahren geht von der Fahrsituation aus, dass durch die Steuervorrichtung während einer Fahrt mittels einer Erkennungseinrichtung ein langsamer als die Sollgeschwindigkeit vorausfahrendes Fremdfahrzeug erkannt wird. Die Erkennungseinrichtung kann auf der Grundlage zum Beispiel des eingangs beschriebenen Stands der Technik bereitgestellt sein. Das Verfahren geht dabei davon aus, dass ein Geschwindigkeitsunterschied einer Fahrgeschwindigkeit des Fremdfahrzeugs zu der Sollgeschwindigkeit zwar größer als Null (das Fremdfahrzeug fährt langsamer), aber kleiner als ein vorbestimmter Höchstwert ist. Mit anderen Worten fährt das Fremdfahrzeug nur geringfügig langsamer als die Sollgeschwindigkeit, wobei "geringfügig" definiert ist durch den Höchstwert. Der Höchstwert kann zum Beispiel in einem Bereich von 2,5 Meter pro Sekunde bis 5 Meter pro Sekunde liegen.

Es ist also in der Fahrsituation ein nur marginal langsamer als die Sollgeschwindigkeit vorausfahrendes Fremdfahrzeug dafür verantwortlich, dass die Steuervorrichtung nicht die Sollgeschwindigkeit einstellen kann. Hier muss durch die Steuervorrichtung entschieden werden, ob sich ein Überholmanöver lohnt oder ob dieses sinnvoll ist. In der beschriebenen Fahrsituation wird daher ein Akkumulatorwert auf einen Startwert eingestellt. Der Startwert kann zum Beispiel 0 betragen. In mehreren nacheinander durchgeführten Prüfdurchläufen wird dann jeweils die folgende Schrittfolge durchgeführt. Es wird ein aktueller Geschwindigkeitswert des Geschwindigkeitsunterschieds erfasst. Es wird also ein Abstand oder eine Differenz der aktuellen Fahrgeschwindigkeit zur Sollgeschwindigkeit ermittelt. Es kann z.B. ein Prüfdurchlauf pro Sekunde durchgeführt werden oder allgemein in einem Zeitintervall, das von 1 Sekunde bis 2 Minuten betragen kann. In Abhängigkeit von dem Geschwindigkeitswert wird ein Vorteilswert gebildet. Der Vorteilswert ist umso größer, je größer der Geschwindigkeitsunterschied ist, d.h. je größer die Differenz zwischen der Fahrgeschwindigkeit des Fremdfahrzeugs und der Sollgeschwindigkeit ist (wobei die Fahrgeschwindigkeit kleiner als die Sollgeschwindigkeit ist). Der Vorteilswert wird zu dem Akkumulatorwert hinzuaddiert. Mit anderen Worten kann nach mehreren Prüfdurchläufen der Akkumulatorwert gewachsen sein oder sich vergrößert haben. Falls der Akkumulatorwert ein vorbestimmtes Überholkriterium erfüllt, wird ein Überholsignal zum Freigeben eines Überholmanövers erzeugt. Das Überholsignal signalisiert also einen Überholwunsch, wie ihn auch zum Beispiel ein Fahrer oder allgemein eine Person empfinden könnte, wenn für einen längeren Zeitraum, d.h. für mehrere Prüfdurchläufe, erkannt wird, dass das vorausfahrende Fremdfahrzeug marginal langsamer als die Sollgeschwindigkeit gefahren ist.

Durch die Erfindung ergibt sich der Vorteil, dass die beschriebene Fahrsituation (marginal langsamer vorausfahrendes Fremdfahrzeug) nicht nur auf der Grundlage einer einzelnen Messung bewertet oder beurteilt wird, sondern auch ein zeitlicher Kontext berücksichtigt werden kann, also überprüft wird, wie lange schon mit welchem Geschwindigkeitsunterschied das Fremdfahrzeug voraus fährt. Hierdurch kann auch dann ein Überholmanöver als sinnvoll oder lohnenswert erkannt werden, wenn einzelne Messungen des Geschwindigkeitsunterschieds eigentlich gegen ein Überholmanöver sprechen, weil dies zum Beispiel einen Geschwindigkeitsvorteil von nur 1 Meter pro Sekunde bringt, was bei singulärer oder einmaliger Betrachtung zum Beispiel gegen Komfortaspekte sprechen würde, wie dies eingangs beschrieben wurde.

Um ausgehend von dem Akkumulatorwert zu entscheiden, ob das Überholsignal erzeugt werden soll, ist vorgesehen, dass das Überholkriterium vorgibt, dass der Akkumulatorwert größer als ein vorbestimmter Schwellenwert ist und/oder dass eine Anstiegsrate des Akkumulatorwerts größer als eine vorbestimmte Mindestrate ist. Es kann also auf den Absolutwert des Akkumulatorwerts und/oder auf seine zeitliche Veränderungsrate reagiert werden.

Die zum Durchführen des Verfahrens ausgelegte Steuervorrichtung kann beispielsweise als Steuergerät für ein Kraftfahrzeug ausgestaltet sein. Die Steuervorrichtung ist zum Durchführen einer Ausführungsform des erfindungsgemäßen Verfahrens eingerichtet. Hierzu kann die Steuervorrichtung eine Prozessoreinrichtung mit Programmcode aufweisen, der dazu eingerichtet ist, bei Ausführen durch die Prozessoreinrichtung eine Ausführungsform des erfindungsgemäßen Verfahrens durchzuführen. Die Prozessoreinrichtung kann hierzu zum Beispiel einen Mikroprozessor oder einen Mikrocontroller aufweisen. Der Programmcode kann in einem Datenspeicher der Prozessoreinrichtung gespeichert sein.

Die Verwendung des Akkumulatorwerts macht das Verfahren sehr flexibel, wenn es um die Berücksichtigung einer Änderung der Fahrsituation geht, die sich während der Prüfdurchläufe ergeben kann.

Es ist vorgesehen, dass in einem Prüfdurchlauf der Akkumulatorwert auf den Startwert zurückgesetzt wird, falls detektiert wird, dass eine Überholspur für das Überholmanöver fehlt. Wird also ein vorausfahrendes Fremdfahrzeug erkannt, während noch ein Überholmanöver möglich ist, und kommt diese Überholmöglichkeit während des Beobachtens des Fremdfahrzeugs, d.h. während der Prüfdurchläufe, abhanden, so wird dies berücksichtigt. Hierdurch ist vermieden, dass das Überholsignal erzeugt wird, solange keine Überholspur zur Verfügung steht. Es wird also in jedem Prüfdurchlauf, bei welchem das Fehlen einer Überholspur detektiert wird, der Akkumulatorwert immer wieder auf den Startwert zurückgesetzt oder der Akkumulatorwert zumindest nicht verändert.

Zu der Erfindung gehören auch vorteilhafte Weiterbildungen, durch deren Merkmale sich zusätzliche Vorteile ergeben.

Wie bereits ausgeführt, wird zu dem aktuellen Geschwindigkeitswert des Geschwindigkeitsunterschieds jeweils ein Vorteilswert gebildet. Bevorzugt wird zum Ermitteln des Vorteilswerts der Geschwindigkeitswert auf ein Intervall abgebildet, das von einem vorbestimmten Mindestwert bis zu einem vorbestimmten Höchstwert reicht. Insbesondere kann der Geschwindigkeitswert auf ein Intervall bis zu dem Wert 1 abgebildet werden. Durch das Abbilden des Geschwindigkeitswerts auf ein Intervall ergibt sich der Vorteil, dass der Vorteilswert unabhängig von einer absoluten Fahrgeschwindigkeit stets eine aussagekräftige Angabe zu einer Vorteilhaftigkeit des ermittelten Geschwindigkeitsunterschieds angibt. Zum Berechnen des Vorteilswerts kann beispielsweise der Geschwindigkeitswert durch den besagten Höchstwert dividiert werden, welcher die Grenze für die Definition des marginal langsamer fahrenden Fremdfahrzeugs darstellt. Beträgt also der Höchstwert beispielsweise 3,5 Meter pro Sekunde, so kann der Geschwindigkeitswert durch 3,5 Meter pro Sekunde dividiert werden, wodurch sich als größter Vorteilswert der Wert 1 ergibt.

Es kann vorgesehen sein, dass in einem Prüfdurchlauf der aktuelle Geschwindigkeitswert oder der aktuelle Vorteilswert ignoriert wird, falls detektiert wird, dass eine Überholspur für das Überholmanöver fehlt. Wird also ein vorausfahrendes Fremdfahrzeug erkannt, während noch ein Überholmanöver möglich ist, und kommt diese Überholmöglichkeit während des Beobachtens des Fremdfahrzeugs, d.h. während der Prüfdurchläufe, abhanden, so wird dies berücksichtigt. Hierdurch ist vermieden, dass das Überholsignal erzeugt wird, solange keine Überholspur zur Verfügung steht.

Der Akkumulatorwert kann in einem Prüfdurchlauf auch dann auf den Startwert zurückgesetzt und/oder der aktuelle Geschwindigkeitswert oder der aktuelle Vorteilswert ignoriert werden, falls der Geschwindigkeitswert oder der Vorteilswert größer als ein vorbestimmter Abbruchswert ist. Der Geschwindigkeitswert wird größer, falls das vorausfahrende Fremdfahrzeug langsamer wird. Dies kann beispielsweise der Fall sein, wenn das vorausfahrende Fremdfahrzeug abbremst. Damit hierdurch nicht der Akkumulatorwert sehr schnell größer wird und unmittelbar das Überholkriterium erfüllt, wird der Akkumulatorwert zurückgesetzt und/oder der aktuelle Geschwindigkeitswert oder der aktuelle Vorteilswert ignoriert. Allgemein wird überprüft, ob eine Situationsänderung der Fahrsituation größer als ein vorbestimmter Abbruchswert ist. Dies verhindert eine ungewollte Überreaktion der Steuervorrichtung. Eine Erzeugung des Überholsignals wird dann bevorzugt von einem vorbestimmten anderen Überholkriterium abhängig gemacht. Mit anderen Worten wird die Fahrsituation auf der Grundlage eines anderen Überholkriteriums neu bewertet. Das Überholen wird dann durch das andere Überholkriterium entschieden werden, dass zum Beispiel berücksichtigen kann, warum das Fremdfahrzeug langsamer geworden ist. Falls beispielsweise eine rote Verkehrsampel vorausliegt, wird nicht überholt. Das andere Überholkriterium kann aus dem Stand der Technik herangezogen werden und ist nicht Bestandteil dieser Erfindung.

In einem Prüfdurchlauf kann der Akkumulatorwert auch dann auf den Startwert zurückgesetzt und/oder der aktuelle Geschwindigkeitswert oder der aktuelle Vorteilswert ignoriert werden, falls eine Zeitdauer, seit welcher die besagte Erkennungseinrichtung das Fremdfahrzeug mit einem Konfidenzwert größer als ein vorbestimmter Mindestkonfidenzwert erkennt, kleiner als eine vorbestimmte Mindestdauer ist. Ein Konfidenzwert gibt an, wie zuverlässig durch die Erkennungseinrichtung das Fremdfahrzeug erkannt oder klassifiziert werden konnte. Ein Konfidenzwert kann beispielsweise durch einen statistischen Klassifikator als ein Bestandteil eines Erkennungsergebnisses ausgegeben werden. Beispielsweise kann ein solcher Konfidenzwert durch ein Hidden-Markov-Modell oder ein neuronales Netzwerk erzeugt oder ausgegeben werden. Falls also die Erkennung des Fremdfahrzeugs noch nicht lange genug (definiert durch die besagte Mindestdauer) erkannt worden ist, wird der Geschwindigkeitswert oder der Vorteilswert ignoriert und/oder der Akkumulatorwert auf dem Startwert gehalten. Mit anderen Worten fängt also die Auswertung gemäß dem Verfahren erst nach einer vorbestimmten Zeitdauer an, die durch die Mindestdauer angegeben ist.

In der Situation, in welcher ein Fremdfahrzeug zwar erkannt wurde, aber noch nicht für die Mindestdauer mit einem Konfidenzwert größer als der Mindestkonfidenzwert erkannt wurde, ist bevorzugt vorgesehen, dass für zumindest einen nachfolgenden Prüfdurchlauf der dann jeweils ermittelte Vorteilswert mit einem Skalierungsfaktor, der größer als 1 ist, skaliert wird. Mit anderen Worten wird also die Vergrößerung des Akkumulatorwerts beschleunigt. Sobald also die Mindestdauer überschritten oder vorbei ist, wird der Vorteilswert, vergrößert oder skaliert um den Skalierungsfaktor, zu dem Akkumulatorwert hinzugerechnet. Hierdurch wird dann in weniger Prüfdurchläufen als ohne den Skalierungsfaktor das Überholkriterium erfüllt. Damit wird die Zeitdauer kompensiert, die abgewartet wird (Mindestdauer), bevor ein erkanntes Fremdfahrzeug überhaupt berücksichtigt wird.

Falls in einem Prüfdurchlauf erkannt wird, dass der Geschwindigkeitswert 0 beträgt (das Fremdfahrzeug fährt mit der Sollgeschwindigkeit) oder das Fremdfahrzeug sogar schneller als die Sollgeschwindigkeit fährt, wird in diesem Fall bevorzugt der Akkumulatorwert auf den Startwert zurückgesetzt und/oder der Geschwindigkeitswert oder der Vorteilswert ignoriert. Es wird aber zumindest ein weiterer Prüfdurchlauf durchgeführt. Mit anderen Worten wird das Verfahren nicht schon dann abgebrochen, wenn einmal erkannt wird, dass das Fremdfahrzeug nun schnell genug fährt (mit der Sollgeschwindigkeit oder schneller). Stattdessen wird eine Hysterese bereitgestellt, durch welche die weitere Durchführung von zumindest einem Prüfdurchlauf sichergestellt ist. Dies verhindert ein sprunghaftes Verändern des Steuerverhaltens der Steuervorrichtung.

Zusätzlich oder alternativ dazu kann vorgesehen sein, dass das Überholkriterium abhängig von einer verbleibenden, restlichen geplanten Fahrstrecke eingestellt wird. Beispielsweise kann der Schwellenwert und/oder die Mindestrate in Abhängigkeit von der restlichen Fahrstrecke eingestellt werden. Die Fahrstrecke kann beispielsweise anhand eines bekannten oder eingestellten Navigationsziels ermittelt werden. Hierdurch ergibt sich der Vorteil, dass der akkumulierte Vorteil, wie er durch den Akkumulatorwert repräsentiert ist, ins Verhältnis zu der Fahrstrecke gesetzt wird. Beträgt die restliche Fahrstrecke beispielsweise nur 1 Kilometer, so ist ein Überholmanöver weniger lohnenswert als für den Fall, dass noch eine Fahrstrecke von 200 Kilometer bevorsteht.

Zu der Erfindung gehört auch ein Kraftfahrzeug, welches die erfindungsgemäße Steuervorrichtung aufweist. Das Kraftfahrzeug ist bevorzugt als Kraftwagen, insbesondere als Personenkraftwagen oder Lastkraftwagen, ausgestaltet. Die Steuervorrichtung kann Bestandteil einer Fahrerassistenzeinrichtung sein, durch welche der beschriebene autonome oder fahrerlose Fahrbetrieb bereitgestellt ist.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: eine Skizze zur Veranschaulichung einer Fahrsituation, in welcher das erfindungsgemäße Verfahren durchgeführt werden kann;
- Fig. 3: ein Flussschaudiagramm zur Beschreibung einer Ausführungsform des erfindungsgemäßen Verfahrens, wie es in dem Kraftfahrzeug von Fig. 1 durchgeführt werden kann;
- Fig. 4: eine Detailansicht zu dem Flussschaudiagramm von Fig. 3; und
- Fig. 5: eine weitere Detailansicht zu dem Flussschaudiagramm von Fig. 3.

Bei dem im Folgenden erläuterten Ausführungsbeispiel handelt es sich um eine bevorzugte Ausführungsform der Erfindung.

In den Figuren sind funktionsgleiche Elemente jeweils mit denselben Bezugszeichen versehen.

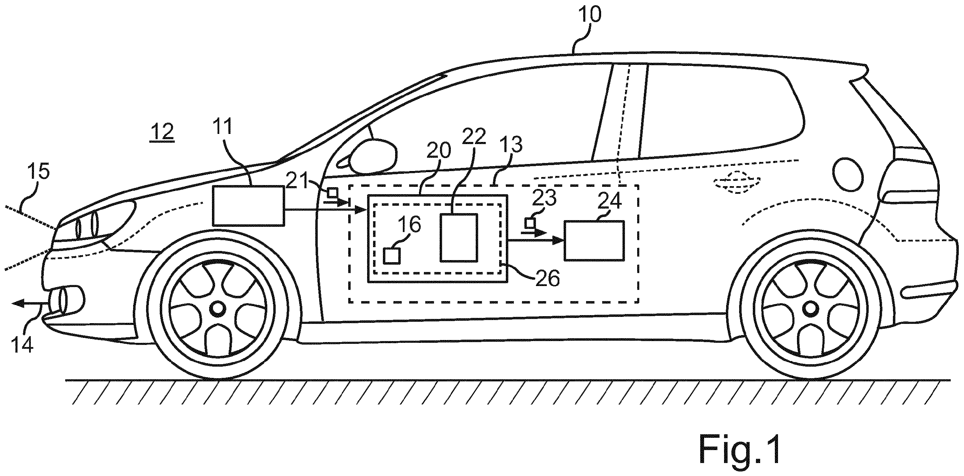

Fig. 1 zeigt ein Kraftfahrzeug 10, bei welchem es sich zum Beispiel um einen Kraftwagen, insbesondere einen Personenkraftwagen oder Lastkraftwagen, handeln kann. Das Kraftfahrzeug 10 kann eine Erkennungseinrichtung 11 zum Erkennen von vorausfahrenden Fahrzeugen und weiteren Objekten und Straßen in einer Umgebung 12 des Kraftfahrzeugs 10 sowie eine Fahrerassistenzeinrichtung 13 zum autonomen oder fahrerlosen Führen des Kraftfahrzeugs 10 aufweisen. Durch die Fahrerassistenzeinrichtung 13 kann eine Fahrgeschwindigkeit 14 des Kraftfahrzeugs 10 geregelt oder eingestellt werden. Die Fahrgeschwindigkeit 14 soll in dem beschriebenen Beispiel durch die Fahrerassistenzeinrichtung 13 auf eine Sollgeschwindigkeit 16 eingestellt werden. Die Sollgeschwindigkeit 16 kann z.B. von einem Fahrer vorgegeben sein. Hierbei kann durch die Erkennungseinrichtung 11 in aus dem Stand der Technik bekannter Weise die Umgebung 12 überwacht werden. Insbesondere ist ein Erfassungsbereich 15 der Erkennungseinrichtung 11 auf einen vorausliegenden Verkehr gerichtet.

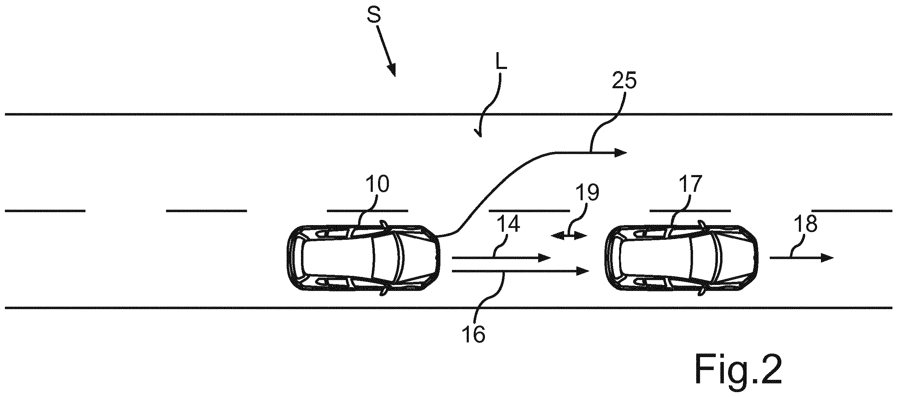

In Fig. 2 ist hierbei veranschaulicht, wie so durch die Erkennungseinrichtung 11 eine aktuelle Fahrsituation S beobachtet oder erkannt werden kann. Durch die Erkennungseinrichtung 11 kann erkannt werden, falls dem Kraftfahrzeug 10 ein Fremdfahrzeug 17 vorausfährt, dessen Fahrgeschwindigkeit 18 geringer ist als die Sollgeschwindigkeit 16. Da das Kraftfahrzeug 10 seine Fahrgeschwindigkeit 14 anpassen muss, also langsamer als die Sollgeschwindigkeit 16 fahren muss, kann sich hier ein Geschwindigkeitsunterschied 19 zur Sollgeschwindigkeit 16 ergeben. Durch die Erkennungseinrichtung 11 kann des Weiteren erkannt werden, dass zusätzlich zu einer aktuell befahrenen Fahrspur eine Überholspur L zur Verfügung steht, über welche das Kraftfahrzeug 10 das vorausfahrende Fremdfahrzeug 17 überholen könnte. Die Erkennungseinrichtung 11 signalisiert die erkannten Objekte als ein Erkennungsergebnis 21 an das Fahrerassistenzsystem 13.

Eine Entscheidung zum Überholen kann durch eine Steuervorrichtung 20 des Fahrerassistenzsystems 13 in Abhängigkeit von einem Erkennungsergebnis 21 der Erkennungseinrichtung 11 mittels einer Entscheidungsmoduls 22 durchgeführt, mittels welchem entschieden wird, ob ein Überholsignal 23 erzeugt werden soll, welches einer Manöverplanung 24 der Fahrerassistenzeinrichtung 13 signalisieren kann, dass das Einleiten eines Überholmanövers 25 sinnvoll oder gewünscht ist. Das Entscheidungsmodul 22 kann beispielsweise als ein Programmmodul einer Prozessoreinrichtung 26 der Steuervorrichtung 20 bereitgestellt sein. Das Programmmodul kann in an sich bekannter Weise Programmcodes für ein Steuerprogramm der Steuervorrichtung 20 umfassen.

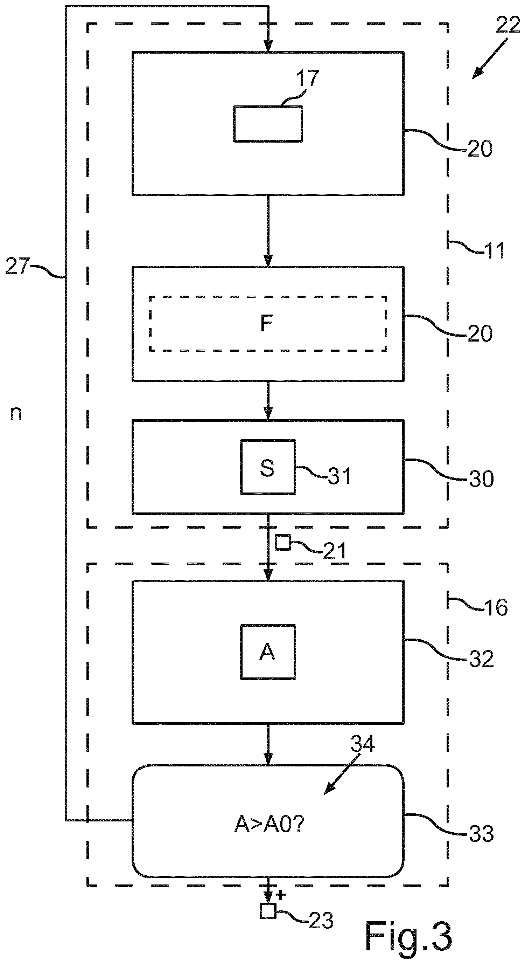

Fig. 3 veranschaulicht die Entscheidungsfindung durch das Entscheidungsmodul 22. In mehreren Prüfdurchläufen 27 kann zunächst eine Objekterkennung 28 zum Erkennen von bewegten oder dynamischen Objekten, wie zum Beispiel des Fremdfahrzeugs 17, eine Infrastrukturerkennung 29 zum Erkennen von Fahrstreifen, wie der Überholspur L, und eine Kartographierung 30 zum Kombinieren der erkannten Infrastrukturobjekte und der erkannten dynamischen Objekte in einer digitalen Karte 31 durchgeführt werden. Somit kann die aktuelle Fahrsituation S ermittelt werden. Diese Fahrsituation S kann dann als Erkennungsergebnis 21 von der Erkennungseinrichtung 11 an die Steuervorrichtung 16 übermittelt werden. Die Steuervorrichtung 16 kann daraufhin ein Verfahren 32 ausführen, durch welches die Vorteilhaftigkeit des Überholmanövers 25 ermittelt wird, und zwar unter der Berücksichtigung, dass der Geschwindigkeitsunterschied 19 nur geringfügig ist, d.h. die aktuelle Fahrgeschwindigkeit 14 nur marginal kleiner als die Sollgeschwindigkeit 16 ist.

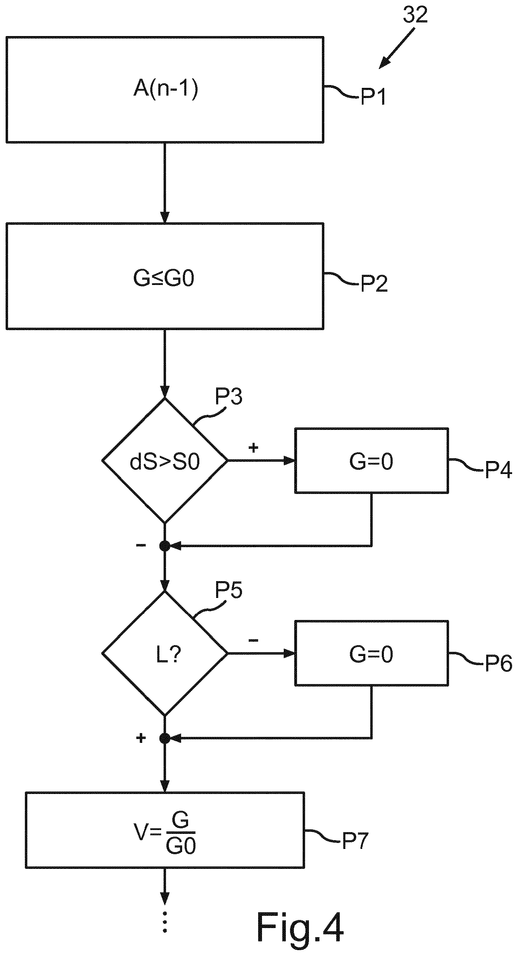

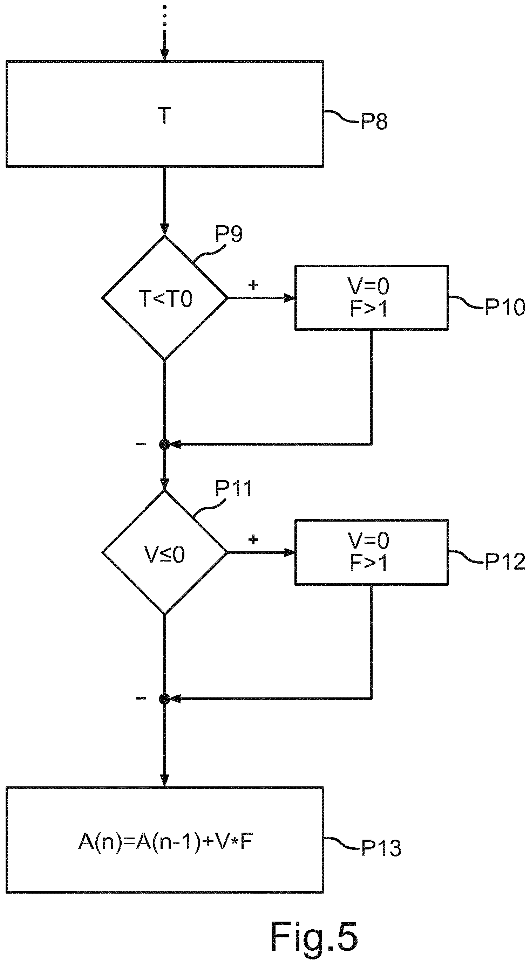

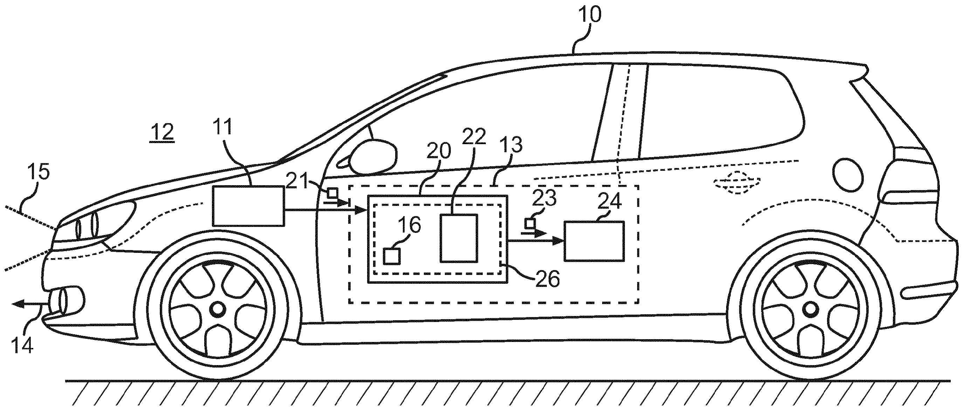

Durch eine Bewertung 33 kann eine Gesamtvorteilhaftigkeit eines Fahrstreifenwechsels auf die Überholspur L ermittelt werden. Die Gesamtvorteilhaftigkeit kann beispielsweise durch einen Akkumulatorwert A ausgedrückt werden, dessen Berechnung im Folgenden anhand von Fig. 4 und Fig. 5 beispielhaft erläutert ist. Zum Entscheiden kann ein Überholkriterium 34 zugrunde gelegt werden kann, welches beispielsweise besagen kann, dass die Gesamtvorteilhaftigkeit in Form des Akkumulatorwerts A größer als ein Schwellenwert A0 sein muss.

Im Zusammenhang mit Fig. 4 und Fig. 5 wird angenommen, dass die Prüfdurchläufe 27 durch einen Zählerwert n identifiziert sind.

Für den ersten Prüfdurchlauf n = 1 kann der Akkumulatorwert A(n=0) auf einen Startwert eingestellt werden, beispielsweise den Wert 0. In einem ersten Prüfschritt P1 kann der Akkumulatorwert A des vorangegangenen Prüfdurchlaufs n -1 aus einem Speicher geladen werden. In einem Prüfschritt P2 kann überprüft werden, ob ein Geschwindigkeitswert G des Geschwindigkeitsunterschieds 19 kleiner als ein Höchstwert GO ist, der festlegt, ab wann es sich um einen marginalen Geschwindigkeitsunterschied handelt. Ist der Geschwindigkeitswert G größer als der Höchstwert G0, so kann anstelle des Verfahrens 32 ein anderes, bekanntes Verfahren zum Entscheiden über das Überholmanöver 25 zugrunde gelegt werden. Dies ist allerdings nicht Bestandteil der vorliegenden Beschreibung. Der Höchstwert GO kann z.B. 3,5 Meter pro Sekunde betragen.

In einem Schritt P3 kann überprüft werden, ob sich die aktuelle Fahrsituation S im Vergleich zur Fahrsituation im vorangegangenen Prüfdurchlauf n-1 signifikant geändert hat. Ein Unterschied dS in der Fahrsituation S kann beispielsweise dadurch definiert sein, dass sich der Geschwindigkeitsunterschied 19 verändert hat. Dies deutet beispielsweise auf den Beginn einer Bremsung oder eines Bremsmanövers des Fremdfahrzeugs 17 hin. Ist der Unterschied dS größer als ein Schwellenwert SO (in Fig. 3 durch ein + symbolisiert), so kann der Akkumulatorwert A auf den Startwert zurückgesetzt werden und/oder der Geschwindigkeitswert G ignoriert werden, was in dem Prüfschritt P4 durch Einstellen eines Geschwindigkeitswerts von 0 erreicht werden kann. Hierdurch wird der aktuelle Geschwindigkeitswert überschrieben.

Falls die Veränderung dS der Fahrsituation S geringer als der Schwellenwert SO ist (in Fig. 3 durch ein - symbolisiert), so kann in einem Prüfschritt P5 überprüft werden, ob eine Überholspur L zur Verfügung steht. Ist dies nicht der Fall (symbolisiert durch -), so kann der Akkumulatorwert A auf den Startwert zurückgesetzt werden und/oder der Geschwindigkeitswert G ignoriert werden, was im Prüfschritt P6 wieder durch Einstellen des Wertes 0 für den Geschwindigkeitswert G erreicht werden kann.

Aus dem Geschwindigkeitswert G kann in einem Prüfschritt P7 ein Vorteilswert V berechnet werden, indem zum Beispiel der Geschwindigkeitswert G auf den Höchstwert GO normiert wird: V = G/GO.

Auf den Prüfschritt P7 kann der Prüfschritt P8 folgen, der in Fig. 5 gezeigt ist. In dem Prüfschritt P8 kann überprüft werden, für welche Zeitdauer T die Erkennungseinrichtung 11 bereits das Fremdfahrzeug 17 zumindest mit einem vorbestimmten Mindestkonfidenzwert erkannt hat. In einem Prüfschritt P9 kann überprüft werden, ob die Zeitdauer T kleiner als eine vorbestimmte Mindestdauer TO ist. Ist dies der Fall (symbolisiert durch +), so kann in einem Prüfschritt P10 der Vorteilswert V ignoriert werden (d.h. V = 0 gesetzt oder überschrieben werden) und für zumindest einen zukünftigen Prüfdurchlauf n+1 ein Skalierungsfaktor F auf einen Wert größer als 1 eingestellt werden, z.B. einen Wert zwischen 1 und 10.

Beträgt die Zeitdauer T dagegen mehr als Mindestdauer T0, (symbolisiert durch -), so kann in einem Prüfschritt P11 überprüft werden, ob im aktuellen Prüfdurchlauf n das Fremdfahrzeug 17 eine Fahrgeschwindigkeit 18 aufweist, die gleich der Sollgeschwindigkeit 16 oder sogar größer als die Sollgeschwindigkeit 16 ist. Dies bedeutet, dass der Vorteilswert V kleiner oder gleich 0 ist. Ist dies der Fall (symbolisiert durch +), so kann in einem Prüfschritt P12 der Vorteilswert ignoriert werden (V = 0) und der Skalierungsfaktor F auf einen Wert größer als 1 eingestellt werden, z.B. einen Wert zwischen 1 und 10.

Schließlich kann in einem Prüfschritt P13 der aktuelle Akkumulatorwert A(n) berechnet werden, indem zu dem Akkumulatorwert A(n -1) des vorangegangenen Prüfdurchlaufs n -1 der Vorteilswert V multipliziert mit dem Skalierungsfaktor F in der in Fig. 5 veranschaulichten Weise hinzuaddiert wird: A(n) = A(n-1) + V * F.

Sodann kann in der Bewertung 33 (Fig. 3) überprüft werden, ob das Überholkriterium 34 erfüllt ist. Ist dies der Fall (symbolisiert durch + in Fig. 3), so kann das Überholsignal 23 erzeugt werden. Andernfalls kann ein weiterer Prüfdurchlauf 27 durchgeführt werden.

Somit wird bei dem Kraftfahrzeug 10 auf einer mehrstreifigen Straße bei einem geringfügig langsameren Vorderfahrzeug abgewägt oder überprüft, ob es vorteilhaft ist, dieses geringfügig langsamere Vorderfahrzeug zu überholen. Eine auf einen einzelnen Zeitpunkt bezogene Betrachtung würde jeweils nicht den Fahrstreifenwechsel gegenüber dem nur marginalen oder kleinen Geschwindigkeitsgewinn rechtfertigen. Ein menschlicher Fahrer würde aber dennoch nach einiger Zeit überholen, da über lange Zeit ein geringer Geschwindigkeitsnachteil eingegangen wird. Oft motivieren auch subjektive Faktoren, wie Sichtbehinderung oder ein als träge empfundener Fahrstil eine Rolle als zusätzliche Entscheidungsfaktoren. Dies wird nun durch die Steuervorrichtung 16 in der beschriebenen Weise implizit berücksichtigt. Es wird hierzu der Gewinn bei einem Fahrstreifenwechsel ermittelt. Dies wird zunächst als Geschwindigkeitsgewinn durch den Geschwindigkeitswert G dargestellt. Der Vorteilhaftigkeitsgewinn ergibt sich somit als gewonnene Delta-Geschwindigkeit. Diese Vorteilhaftigkeit wird aber beschränkt, um ein ungewolltes Verhalten zu verhindern. Dies wird durch den Prüfschritt P3 allgemein repräsentiert. Somit weist die Funktion ein Limit oder eine Begrenzung auf, sodass zum Beispiel bei einem sehr langsam vorausfahrenden Vorderfahrzeug hieraus nicht eine unkontrollierte, sofortige Einleitung eines Überholmanövers 25 resultiert. Des Weiteren werden situationsspezifische Entscheidungskriterien zugrunde gelegt, also z.B. überprüft, ob noch eine Überholspur L zur Verfügung steht und/oder ob das Fremdfahrzeug 17 zuverlässig erkannt wurde und/oder ob das Fremdfahrzeug 17 beschleunigt hat.

Im Ganzen funktioniert der Algorithmus ähnlich einem PID-Regler (PID: Proportional, Integral, Differenzial). Es gibt Zustandsgrößen, die eine Steueraktion (Fahrstreifenwechsel) beeinflussen, wobei eine Zustandsintegration mittels des Akkumulatorwerts A erreicht wird und auf schnell wirkende Zustandsänderungen (z.B. Wegfall der Überholspur L) eine Entscheidung verwerfen oder sie auch bevorzugen.

Insgesamt zeigt das Beispiel, wie durch die Erfindung eine marginale, integrale Vorteilhaftigkeit bei der Bewertung des Überholnutzens eines geringfügig langsamer vorausfahrenden Fremdfahrzeugs bewertet werden kann.

### Bezugszeichenliste

- 10: Fahrzeug
- 11: Erkennungseinrichtung
- 12: Umgebung
- 13: Fahrerassistenzeinrichtung
- 14: Fahrgeschwindigkeit
- 15: Erfassungsbereich
- 16: Sollgeschwindigkeit
- 17: Fremdfahrzeug
- 18: Fahrgeschwindigkeit
- 19: Geschwindigkeitsunterschied
- 20: Steuervorrichtung
- 21: Erkennungsergebnis
- 22: Umgebungsüberwachung
- 23: Überholsignal
- 24: Manöverplanung
- 25: Überholmanöver
- 26: Prozessoreinrichtung
- 27: Prüfdurchlauf
- 28: Objekterkennung
- 29: Infrastrukturerkennung
- 30: Kartographierung
- 31: Karte
- 32: Prüfung
- 33: Bewertung
- 34: Überholkriterium
- A: Akkumulatorwert
- A0: Schwellenwert
- dS: Unterschied
- L: Überholspur
- F: Skalierungsfaktor
- G: Geschwindigkeitswert
- G0: Höchstwert
- P1: Prüfschritt
- P2: Prüfschritt
- P3: Prüfschritt
- P4: Prüfschritt
- P5: Prüfschritt
- P6: Prüfschritt
- P7: Prüfschritt
- P8: Prüfschritt
- P9: Prüfschritt
- P10: Prüfschritt
- P11: Prüfschritt
- P12: Prüfschritt
- P13: Prüfschritt
- S: Fahrsituation
- T: Zeitdauer
- T0: Mindestdauer
- V: Vorteilswert

## Patentansprüche

1. Verfahren zum Betreiben einer Steuervorrichtung (20) zum autonomen Führen eines Kraftfahrzeugs (10), wobei als eine durch die Steuervorrichtung (20) einzustellende Fahrgeschwindigkeit (14) des Kraftfahrzeug (10) eine Sollgeschwindigkeit (16) vorgegeben wird und durch die Steuervorrichtung (20) mittels einer Erkennungseinrichtung (11) ein langsamer als die Sollgeschwindigkeit (16) vorausfahrendes Fremdfahrzeug (17) erkannt wird, wobei ein Geschwindigkeitsunterschied (19) einer Fahrgeschwindigkeit (18) des Fremdfahrzeugs (17) zu der Sollgeschwindigkeit (16) größer als Null, aber kleiner als ein vorbestimmter Höchstwert (GO) ist,
**dadurch gekennzeichnet, dass**
in diesem Fall ein Akkumulatorwert (A) auf einen Startwert eingestellt wird und in mehreren nacheinander durchgeführten Prüfdurchläufen (27) jeweils ein aktueller Geschwindigkeitswert (G) des Geschwindigkeitsunterschieds (19) erfasst wird und in Abhängigkeit von dem Geschwindigkeitswert (G) ein Vorteilswert (V) gebildet wird und der Vorteilswert (V) zu dem Akkumulatorwert (A) hinzuaddiert wird und falls der Akkumulatorwert (A) ein vorbestimmtes Überholkriterium (34) erfüllt, ein Überholsignal (23) zum Freigeben eines Überholmanövers (25) erzeugt wird, wobei
- das Überholkriterium (34) vorgibt, dass der Akkumulatorwert (A) größer als ein vorbestimmter Schwellenwert (A0) ist und/oder dass eine Anstiegsrate des Akkumulatorwerts (A) größer als eine vorbestimmte Mindestrate ist,
- in einem Prüfdurchlauf (27) der Akkumulatorwert (A) auf den Startwert zurückgesetzt wird, falls detektiert wird, dass eine Überholspur (L) für das Überholmanöver (25) fehlt.

2. Verfahren nach Anspruch 1, wobei zum Ermitteln des Vorteilswerts (V) der Geschwindigkeitswert (G) auf ein Intervall bis zu einem vorbestimmten Höchstwert, insbesondere bis 1, abgebildet wird.

3. Verfahren nach einem der vorhergehenden Ansprüche, wobei in einem Prüfdurchlauf (27) der Geschwindigkeitswert (G) oder der Vorteilswert (V) ignoriert wird, falls detektiert wird, dass eine Überholspur (L) für das Überholmanöver (25) fehlt.

4. Verfahren nach einem der vorhergehenden Ansprüche, wobei in einem Prüfdurchlauf (27) der Akkumulatorwert (A) auf den Startwert zurückgesetzt und/oder der Geschwindigkeitswert (G) oder der Vorteilswert (V) ignoriert wird, falls eine Situationsänderung (sS der Fahrsituation (S), insbesondere der Geschwindigkeitswert (G) oder der Vorteilswert (V), größer als ein vorbestimmter Abbruchswert (S0) ist.

5. Verfahren nach einem der vorhergehenden Ansprüche, wobei in einem Prüfdurchlauf (27) eine Zeitdauer (T), seit welcher die Erkennungseinrichtung (11) das Fremdfahrzeug (17) mit einem Konfidenzwert größer als ein vorbestimmter Mindestkonfidenzwert erkennt, ermittelt wird und falls die Zeitdauer (T) kleiner als eine vorbestimmte Mindestdauer (TO) ist, der Geschwindigkeitswert (G) oder der Vorteilswert (V) ignoriert und/oder der Akkumulatorwert (A) auf den Startwert zurückgesetzt wird.

6. Verfahren nach Anspruch 5, wobei für zumindest einen nachfolgenden Prüfdurchlauf (27) der jeweils ermittelte Vorteilswert (V) mit einem Skalierungsfaktor (F), der größer als 1 ist, skaliert wird.

7. Verfahren nach einem der vorhergehenden Ansprüche, wobei in einem Prüfdurchlauf (27) erkannt wird, dass der Geschwindigkeitswert (G) 0 beträgt oder das Fremdfahrzeug (17) schneller als die Sollgeschwindigkeit (16) fährt, und in diesem Fall zum einen der Akkumulatorwert (A) auf den Startwert zurückgesetzt und/oder der Geschwindigkeitswert (G) oder der Vorteilswert (V) ignoriert wird und zum anderen zumindest ein weiterer Prüfdurchlauf (27) durchgeführt wird.

8. Verfahren nach einem der vorhergehenden Ansprüche, wobei das Überholkriterium (34) vorgibt, dass das Überholkriterium (34) abhängig von einer verbleibenden, restlichen geplanten Fahrstrecke eingestellt wird.

9. Steuervorrichtung (20) für ein Kraftfahrzeug (10), wobei die Steuervorrichtung (20) eine Prozessoreinrichtung (26) mit Programmcode (22) aufweist, der dazu eingerichtet ist, bei Ausführen durch die Prozessoreinrichtung (26) ein Verfahren nach einem der vorhergehenden Ansprüche durchzuführen.

10. Kraftfahrzeug (10) mit einer Steuervorrichtung (20) nach Anspruch 9.

## Claims

1. Method for operating a control device (20) for autonomous guidance of a motor vehicle (10), wherein a nominal speed (16) is specified as a driving speed (14) of the motor vehicle (10) to be set by the control device (20) and another vehicle (17), driving in front of the motor vehicle at a driving speed that is slower than the nominal speed (16), is detected by the control device (20) by means of a detection device (11), wherein a difference in speed (19) between a driving speed (18) of the other vehicle (17) and the nominal speed (16) is greater than zero but less than a predetermined maximum value (G0), **characterized in that**
in this case an accumulator value (A) is set to a starting value and a current speed value (G) of the difference in speed (19) is respectively detected in a number of successively performed test runs (27) and on the basis of the speed value (G) an advantage value (V) is formed and the advantage value (V) is added to the accumulator value (A) and, if the accumulator value (A) satisfies a predetermined overtaking criterion (34), an overtaking signal (23) enabling an overtaking manoeuvre (25) is generated, wherein
- the overtaking criterion (34) specifies that the accumulator value (A) is greater than a predetermined threshold value (A0) and/or that a rate of increase of the accumulator value (A) is greater than a predetermined minimum rate,
- in a test run (27), the accumulator value (A) is reset to the starting value if it is detected that there is no overtaking lane (L) for the overtaking manoeuvre (25).

2. Method according to Claim 1, wherein, for determining the advantage value (V), the speed value (G) is mapped onto an interval up to a predetermined maximum value, in particular up to 1.

3. Method according to one of the preceding claims, wherein, in a test run (27), the speed value (G) or the advantage value (V) is ignored if it is detected that there is no overtaking lane (L) for the overtaking manoeuvre (25).

4. Method according to one of the preceding claims, wherein, in a test run (27), the accumulator value (A) is reset to the starting value and/or the speed value (G) or the advantage value (V) is ignored if a change in situation (sS) of the driving situation (S), in particular the speed value (G) or the advantage value (V), is greater than a predetermined termination value (S0).

5. Method according to one of the preceding claims, wherein, in a test run (27), a period of time (T) since which the detection device (11) detects the other vehicle (17) with a confidence value greater than a predetermined minimum confidence value is determined and, if the period of time (T) is less than a predetermined minimum period (T0), the speed value (G) or the advantage value (V) is ignored and/or the accumulator value (A) is reset to the starting value.

6. Method according to Claim 5, wherein, for at least one subsequent test run (27), the advantage value (V) determined in each case is scaled with a scaling factor (F), which is greater than 1.

7. Method according to one of the preceding claims, wherein, in a test run (27), it is detected that the speed value (G) is 0 or the other vehicle (17) is driving faster than the nominal speed (16), and in this case on the one hand the accumulator value (A) is reset to the starting value and/or the speed value (G) or the advantage value (V) is ignored and on the other hand at least one further test run (27) is carried out.

8. Method according to one of the preceding claims, wherein the overtaking criterion (34) specifies that the overtaking criterion (34) is set dependent on a remaining residual planned driving distance.

9. Control device (20) for a motor vehicle (10), wherein the control device (20) has a processor device (26) with program code (22) which is designed to carry out a method according to one of the preceding claims when it is executed by the processor device (26).

10. Motor vehicle (10) with a control device (20) according to Claim 9.

## Revendications

1. Procédé de fonctionnement d'un dispositif de commande (20) destiné à la conduite autonome d'un véhicule automobile (10), une vitesse de consigne (16) étant spécifiée comme vitesse de roulement (14) du véhicule automobile (10), laquelle doit être réglée par le dispositif de commande (20), et un autre véhicule (17), qui est à une vitesse inférieure à la vitesse de consigne (16), étant détecté par le dispositif de commande (20) à l'aide d'un moyen de détection (11), une différence de vitesse (19) entre une vitesse de roulement (18) de l'autre véhicule (17) et la vitesse de consigne (16) étant supérieure à zéro, mais inférieure à une valeur maximale prédéterminée (G0), **caractérisé en ce que**
une valeur d'accumulateur (A) est alors réglée à une valeur initiale et une valeur de vitesse actuelle (G) de la différence de vitesse (19) est détectée en plusieurs essais successifs (27) et une valeur avantageuse (V) est formée en fonction de la valeur de vitesse (G) et la valeur avantageuse (V) est ajoutée à la valeur d'accumulateur (A) et, si la valeur d'accumulateur (A) satisfait à un critère de dépassement prédéterminé (34), un signal de dépassement (23) est généré pour permettre une manœuvre de dépassement (25),
- le critère de dépassement (34) spécifiant que la valeur d'accumulateur (A) est supérieure à une valeur seuil prédéterminée (A0) et/ou qu'un taux d'augmentation de la valeur d'accumulateur (A) est supérieur à un taux minimum prédéterminé,
- la valeur d'accumulateur (A) étant réinitialisée à la valeur initiale lors d'un essai (27) s'il est détecté qu'il manque une voie de dépassement (L) pour la manœuvre de dépassement (25).

2. Procédé selon la revendication 1, la valeur de vitesse (G) étant reproduite sur un intervalle jusqu'à une valeur maximale prédéterminée, en particulier jusqu'à 1, pour déterminer la valeur avantageuse (V).

3. Procédé selon l'une des revendications précédentes, la valeur de vitesse (G) ou la valeur avantageuse (V) étant ignorée dans un essai (27) s'il est détecté qu'il manque une voie de dépassement (L) pour la manœuvre de dépassement (25).

4. Procédé selon l'une des revendications précédentes, la valeur d'accumulateur (A) étant réinitialisée lors d'un essai (27)à la valeur initiale et/ou la valeur de vitesse (G) ou la valeur avantageuse (V) étant ignorée si un changement de situation (sS) de la situation de roulement (S), en particulier de la valeur de vitesse (G)) ou la valeur avantageuse (V) est supérieur à une valeur d'interruption prédéterminée (S0).

5. Procédé selon l'une des revendications précédentes, une durée (T), à partir de laquelle le moyen de détection (11) a détecté l'autre véhicule (17) avec une valeur de confiance supérieure à une valeur de confiance minimale prédéterminée, est déterminée lors d'un essai (27) et, si la durée (T) est inférieure à une durée minimale prédéterminée (T0), la valeur de vitesse (G) ou la valeur avantageuse (V) est ignorée et/ou la valeur d'accumulateur (A) est réinitialisée à la valeur initiale.

6. Procédé selon la revendication 5, la valeur avantageuse (V) déterminée à chaque fois étant mise à l'échelle, pour au moins un essai ultérieur (27), avec un facteur de mise à l'échelle (F) qui est supérieur à 1.

7. Procédé selon l'une des revendications précédentes, une détection du fait que la valeur de vitesse (G) est 0 ou que l'autre véhicule (17) se déplace à une vitesse supérieure à la vitesse de consigne (16) étant effectuée lors d'un essai (27) et, dans ce cas, d'une part la valeur d'accumulateur (A) étant réinitialisée à la valeur initiale et/ou la valeur de vitesse (G) ou la valeur avantageuse (V) étant ignorée et, d'autre part, au moins un essai supplémentaire (27) étant effectué.

8. Procédé selon l'une des revendications précédentes, le critère de dépassement (34) spécifiant que le critère de dépassement (34) est réglé en fonction d'un itinéraire restant, planifié résiduel.

9. Dispositif de commande (20) destiné à un véhicule automobile (10), le dispositif de commande (20) comportant un moyen formant processeur (26) pourvu d'un code de programme (22) qui est adapté pour mettre en œuvre un procédé selon l'une des revendications précédentes lorsqu'il est exécuté par le moyen formant processeur (26).

10. Véhicule automobile (10) comprenant un dispositif de commande (20) selon la revendication 9.
